# EUROPÄISCHE PATENTSCHRIFT

(11) **EP 4 180 697 B1**
(45) Veröffentlichungstag und Bekanntmachung des Hinweises auf die Patenterteilung: **29.01.2025**
(21) Anmeldenummer: 22204289.7
(22) Anmeldetag: 28.10.2022
(51) Int. Cl.: F16K 7/16, F16K 7/12, F16K 27/02

(54) **MEMBRANVENTIL MIT BEWEGLICHEM DRUCKSTUECK**
DIAPHRAGM VALVE WITH MOVEABLE PRESSURE COMPONENT
SOUPAPE À DIAPHRAGME AVEC UN ÉLÉMENT DE GÉNÉRATION DE PRESSION

(30) Priorität: 11.11.2021 DE 102021129349
(43) Veröffentlichungstag der Anmeldung: 17.05.2023
(73) Patentinhaber: SISTO Armaturen S.A., 6468 Echternach (LU)
(72) Erfinder: HACKENBERGER, Bernd, 6468 Echternach (LU); LOEW, Pascal, 6468 Echternach (LU); GERLACH, Markus, 6468 Echternach (LU); SICHWARDT, Paul, 6468 Echternach (LU)
(74) Vertreter: Busch, Tobias

(56) Entgegenhaltungen:
- EP-A2- 0 285 573
- EP-A2- 1 413 812
- EP-B1- 3 366 961
- DE-A1- 1 817 659
- DE-A1- 2 619 004

## Beschreibung

Die Erfindung betrifft ein Membranventil, das eine Membran, eine Haube und eine Kolbenstange umfasst, wobei auf die Membran eine Abstützanordnung einwirkt.

Membranventile können zur Dosierung von unterschiedlichen Fluiden eingesetzt werden, beispielsweise von Gasen, Dämpfen oder Flüssigkeiten. Beispielgebend können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängen im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Die Membran ist zwischen einem Gehäuseunterteil und einem Gehäuseoberteil fest eingespannt. Das Gehäuseoberteil wird auch als Haube bezeichnet und bildet den Überbau mit dem Antrieb der Membran. In der Haube sind die Antriebsspindel, die Abdichtung der Spindel und der Antrieb selbst integriert. Je nach Antrieb weist die Haube eine erhebliche Masse auf, die auf das Gehäuseunterteil einwirkt und von diesem getragen werden muss.

Die Kolbenstange im Membranventil ist ein zylinderförmiges Maschinenelement, das mittels Membranschraube mit der Membran verbunden ist und die Membran in ihrer Position verformt. Die Kolbenstange wird über einen Antrieb in ihrer vorgegebenen Richtung bewegt. Der Antrieb kann händisch, elektrisch, pneumatisch oder hydraulisch angetrieben sein.

Die Membranschraube ist ein stiftartiges Element, das formschlüssig in eine Lage der Membran integriert ist. Die Membranschraube ist über die Kolbenstange mit der Spindel des Antriebs verbunden. Auf diese Weise kann die Membran verformt werden.

Zur Stabilisierung der Membran auf der fluidabgewandten Seite und somit auf der haubenzugewandten Seite sind Abstützanordnungen in Form von auf der Membran aufliegenden Spiralen bekannt, die eine dauerhafte schädigende Verformung in der Offenstellung teilweise kompensieren können.

Die DE 26 19 004 betrifft ein Absperrorgan, insbesondere ein Membran-Absperrorgan mit einem Absperrorgan-Gehäuse, in dem ein Fluidkanal ausgebildet ist, einer elastischen Membran, die mit ihrem Rand zwischen das Gehäuse und einen Absperrorgan-Deckel eingespannt ist und einem beweglichen geeignet geformten Absperrorgankern, der an einer im Deckel drehbar angebrachten Spindel befestigt ist, um die Membran zwischen einer Stellung, in der der Fluidkanal geöffnet ist und einer Stellung, in der der Fluidkanal abgesperrt ist zu versetzen.

Die EP 1 413 812 A2 zeigt ein Membranventil und dergleichen wie Einsitzventil, Druckhalteventil mit einer Membrane, die in einem Ventilgehäuse dichtend eingelagert ist und den Steuerraum oder die bewegliche Ventilschaftstange von dem Produktraum trennt, mit einer Stützeinrichtung zur Stabilisierung der eingesetzten Membrane.

Die DE 18 17 659 A1 offenbart einen elastischen Verschluss zum Schließen von Öffnungen, mit welcher auch im Falle eines Betriebsdruckes über 10 Atü die Durchflussöffnung eines Ventils betriebssicher und für eine lange Zeit ohne Betriebsstörungen verschlossen und geöffnet werden kann.

Die EP 0 285 573 A2 stellt eine Membran dar, die speziell für Geräte entwickelt wurde, die in sterilen Umgebungen arbeiten, umfasst eine Vielzahl von konzentrischen ringförmigen Körpern, die mit einer Oberfläche der Membran verbunden sind, und eine Vielzahl von radialen Stiften, die mit den ringförmigen Körpern verbunden sind, wobei die Anordnung der ringförmigen Körper und der Stifte so ausgelegt ist, dass sie die auf die Membran wirkende Druckbelastung aufnehmen und auf die Umfangsbereiche der beweglichen und festen Körper ableiten können.

Die EP 3 366 961 B1 beschreibt ein Ventil mit einer Membran, die einen Rand aufweist, der in einer Kammerung angeordnet ist, die von einem Gehäuseteil und einer Haube gebildet wird. Zwischen dem Druckstück und der Membran ist ein Druckverteilungselement in Form einer Abstützspirale angeordnet, um die Membran in der Offenstellung abzustützen.

Bisher werden solche Druckverteilungselemente bzw. Abstützspiralen jedoch nur in ausreichend großen Membranventilen eingesetzt, da eine Abstützspirale eine kleine Membran zu sehr aussteift und ihre Beweglichkeit einschränkt. Die Membranen kleinerer Ventilbaureihen erfahren nur eine bedingte Abstützung durch ein eventuell vorhandenes Druckstück und neigen zu einem schnelleren Verschleißverhalten bzw. einem häufigeren Auftreten einer Schädigung im Vergleich zu Membranen größerer Ventilbaureihen.

Aufgabe der Erfindung ist es, ein Membranventil bereitzustellen, das die Membran möglichst gut vor einer Schädigung schützt. Dabei soll die Membran durch eine ganzheitliche Abstützung vor Schädigungen durch Verformungen bewahrt werden. Darüber hinaus soll das Membranventil den Anforderungen des dauerhaften Betriebes gerecht werden und dabei äußerst langlebige Eigenschaften bewahren. Das Membranventil soll sich auf möglichst preiswerte sowie besonders einfache Weise herstellen lassen.

Diese Aufgabe wird erfindungsgemäß durch ein Membranventil gemäß den Merkmalen des Anspruchs 1 gelöst. Bevorzugte Varianten sind den Unteransprüchen, der Beschreibung und den Figuren zu entnehmen.

Gemäß der Erfindung ist die Abstützanordnung aus klappbaren Elementen ausgebildet, wobei die Kolbenstange eine Ausformung für eine Abrollbewegung der Elemente und eine spezielle Aufnahme aufweist und die Elemente beweglich an der Kolbenstange gelagert sind, wodurch die Ausformung der Kolbenstange den Elementen ein Abrollen für eine Klappbewegung zwischen einer Offen- und einer Geschlossenstellung ermöglichen.

Eine Abstützanordnung umfasst generell alle Elemente, die zum Schutz und zur Abstützung einer Membran dienen. Im Anwendungsfall kleiner Membranventile schränkt die Abstützanordnung die Beweglichkeit der Membran nicht zu sehr ein, da sie aus kleinen, beweglichen Elementen gebildet ist.

Vorzugsweise sind die Elemente als prismenförmige Körper ausgebildet und weisen hierbei eine trapezförmige Grundfläche auf.

Idealerweise erstrecken sich die Elemente der Abstützanordnung zwischen der Kolbenstange und der Haube des Membranventils. Dadurch ist die Membran auf der fluidabgewandten Seite komplett von den klappbaren Elementen bedeckt und erfährt somit eine wirksame Abstützung. Diese Abstützung gewährleistet, insbesondere in der Offenstellung des Ventils, einen Schutz gegen das sogenannte Fließen der Elastomere der Membran in einen nicht abgestützten Raum. Dieser Schutz ermöglicht gerade den dauerhaften und länger anhaltenden Betrieb des Membranventils, insbesondere auch bei höheren Drücken.

Um der Membran auch mit der Abstützung ein ausreichend bewegliches und elastisches Betriebsverhalten zu verleihen, sind die Elemente der Abstützanordnung sternförmig ausgerichtet.

Gerade in kleinen Membranventilen ist der Platz zwischen der Kolbenstange und der Haube sehr begrenzt. Für ein bewegliches und elastisches Betriebsverhalten können die Elemente zwischen der Offen- und der Geschlossenstellung klappen.

Um diese Klappbewegung auf engem Raum zu realisieren, weist die Kolbenstange eine Ausformung und eine spezielle Aufnahme für die Elemente auf. Durch die Ausformung der Kolbenstange wird den Elementen ein Abrollen für die Klappbewegung zwischen der Offen- und Geschlossenstellung ermöglicht.

Zur Führung der Elemente in ihrer Klappbewegung weist die Kolbenstange eine besondere Form auf. Dazu läuft die Kolbenstange vorzugsweise kegelförmig zu und endet in einer hyperbolischen Auskragung. Durch diese besondere Form führt und begrenzt die Kolbenstange die Bewegung der Elemente. Idealerweise weist die Kolbenstange eine Anschlagsfläche zur Begrenzung der Elementbewegung auf. Dazu finden die Elemente in der kegelförmigen Spitze eine Anschlagsfläche, insbesondere in der Geschlossenstellung der Membran.

Die Elemente sind beweglich an der Kolbenstange gelagert.

Dadurch stützen die Elemente die Membran in ihrer Bewegung sowie in der Offen- bzw. in der Geschlossenstellung ab und gewährleisten gleichzeitig die gewünschte Elastizität der Membran.

In einer Variante der Erfindung sind die Elemente kraftschlüssig mit der Kolbenstange verbunden. Vorzugsweise erzielen speziell ausgeführte Hinterschnitte zwischen den Elementen und der Kolbenstange die gewünschte Beweglichkeit der Elemente.

Die Elemente weisen eine spezielle Form zur Anlage an die Kolbenstange sowie zur Auflage an der Haube auf. Dazu weisen die Elemente auf der Seite der Kolbenstange eine Abrundung und auf der Seite der Haube eine Keilform auf. Aufgrund dieser vorteilhaften Ausbildung der Elemente, insbesondere der Abrundung, können die Elemente die Bewegung von der Offenstellung in die Geschlossenstellung und zurück durch die Lagerung in der Kolbenstange ausführen. Gleichzeitig bildet die Keilform in Kombination mit der Haube eine vorteilhafte Begrenzung der Membranbewegung.

In einer besonders günstigen Variante der Erfindung weist die Haube eine Auflagefläche für die Elemente auf. Dadurch ist die ganzheitliche Auflage der Elemente auf der Membran gewährleistet. Die Elemente erstrecken sich von der Kolbenstange bis in die Haube hinein, so dass die Membran in jeder Stellung immer abgestützt ist, wodurch ein Fließen der Elastomerbestandteile der Membran wirksam verhindert wird und ein zuverlässiger sowie dauerhafter Betrieb des Membranventils gesichert wird.

Vorzugsweise weist die Haube einen Hohlraum zur Aufnahme der Elemente auf. Dadurch ist gewährleistet, dass die Membran komplett von den Elementen abgedeckt ist. Gleichzeitig ermöglicht der Hohlraum in der Haube die Bewegung der Elemente zwischen der Offen- und der Geschlossenstellung, da gerade in der Mittelstellung die Elemente am weitesten in den Hohlraum hineinragen.

In einer bevorzugten Variante der Erfindung weist die Haube eine Anschlagsfläche zur Begrenzung der Elementbewegung auf. Hierdurch können die Elemente maximal bis in die Offen- bzw. in die Geschlossenstellung bewegt werden. Ein Verrutschen, ein Verrücken oder gar ein Herausdrücken aus dem vorgegebenen Bewegungsweg ist dadurch nicht möglich.

Für die Gewährleistung einer ausreichenden Beweglichkeit und Elastizität der Membranverformung umfasst die Abstützanordnung mehr als vier, vorzugsweise mehr als acht, insbesondere mehr als zwölf, Elemente.

In einer günstigen Variante der Erfindung nimmt der Querschnitt eines Elements von der Kolbenstange zur Haube zu. Besonders bevorzugt nimmt die Höhe des Elements von der Abrundung bis zum keilförmigen Ende des Elements zu. Dadurch werden die leichtgängige Lagerung der Elemente in der Kolbenstange sowie die Auflage als auch die Bewegungsbegrenzung durch den Anschlag in der Haube erzielt.

In einer weiteren Variante der Erfindung umfasst die Abstützanordnung ein zusätzliches Druckverteilungselement. Ein solches Druckverteilungselement kann vorzugsweise in Form einer elastischen Abstützspirale ausgebildet sein und ist vorzugsweise zwischen der Membran und den Elementen der Abstützanordnung angeordnet.

Bei einer besonders bevorzugten Variante der Erfindung werden die Elemente und die Kolbenstange gleichzeitig generativ gefertigt. Dadurch lässt sich besonders einfach ein formschlüssiger Verbund der Kolbenstange mit den Elementen realisieren, wobei die Elemente beweglich um die Kolbenstange angeordnet sind.

Die Abstützanordnung mit klappbaren Elementen erzielt eine hervorragende Abstützung der Membran bei Bewegung und in ruhender Stellung, insbesondere auch bei kleinen Membranventilen. Ein Fließen der Elastomermembran, gerade im dauerhaften Betrieb, in einen nicht abgestützten Raum oberhalb der Membran wird hierdurch wirksam vermieden.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Schnittdarstellung eines Membranventils nach dem Stand der Technik,
- Fig. 2: eine Schnittdarstellung einer Kolbenstange mit einem klappbaren Element der Abstützanordnung,
- Fig. 3: eine schematische Skizze eines klappbaren Elements in zwei Positionen,
- Fig. 4: eine Draufsicht der sternförmigen Abstützanordnung.

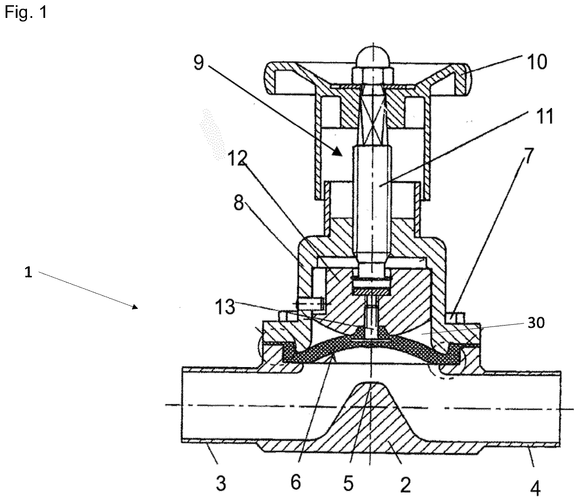

Das in Fig. 1 dargestellte Membranventil 1 nach dem bisherigen Stand der Technik besitzt ein Gehäuseunterteil 2, welches Anschlüsse 3, 4 und ein Wehr 5 umfasst. Das Wehr 5 dient als Sitzfläche für die Membran 6. Die Membran 6 ist mithilfe von Schrauben 7 eingespannt zwischen dem Gehäuseunterteil 2 und der Haube 8. Die Membran ist über eine Membranschraube 13 mit der Spindel 11 verbunden. In der Haube 8 sind die zur Betätigung der Membran 6 notwendigen Elemente integriert, wie beispielsweise ein Antrieb 9, der im Ausführungsbeispiel als Handrad 10 ausgeführt ist, sowie eine Spindel 11. An der Spindel 11 ist ein Druckstück 12 befestigt. Das Druckstück 12 ist verschieblich in der Haube 8 angeordnet und wird von einer inneren Wand der Haube 8 geführt. Durch Betätigung des Antriebs 9 wird über die Spindel 11 eine vertikale Verschiebung des Druckstücks 12 bewirkt, sodass sich die Membran 6 verformt und der freie Querschnitt zwischen dem Wehr 5 und der Membrananordnung vergrößert bzw. verkleinert werden kann.

Das Membranventil 1 weist oberhalb der Membran 6 in der Offenstellung einen Raum 30 auf. Im dauerhaften Betrieb kann mit zunehmender Betriebsdauer bei höheren Betriebsdrücken Elastomermaterial der Membran 6 in den Raum 30 fließen und zur Schädigung der Membran 6 führen.

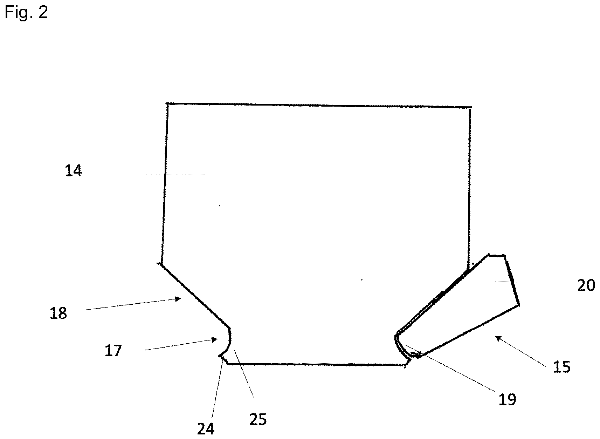

Fig. 2 zeigt eine Schnittdarstellung einer Kolbenstange 14 als Verlängerung der Spindel 11 mit einem klappbaren Element 15 der Abstützanordnung 16. Das klappbare Element 15 ist kraftschlüssig mit der Kolbenstange 14 verbunden, indem die Abrundung 19 in der Ausformung 17 beweglich gelagert ist. Zur Bildung der Ausformung 17 läuft die Kolbenstange 14 kegelförmig zu und mündet in einer hyperbolisch geformten Auskragung 25, die eine Fase 24 aufweist. In der Geschlossenstellung der Membran 6 liegt das Element 15 an der Anschlagsfläche 18 des kegelförmigen Teils der Kolbenstange 14 an. Die Anschlagsfläche 18 begrenzt die Elementbewegung und sichert eine permanente Auflage sowie Abstützung der Abstützungsanordnung 16 der Membran 6 auch in der Geschlossenstellung.

Das Element 15 weist eine Abrundung 19 auf, die an der Kolbenstange 14 anliegt, und weist weiterhin in Richtung der Haube 8 eine Keilform 20 auf. Der Querschnitt des prismenförmigen Elements 15 nimmt von der Abrundung 19 zur Keilform 20 stetig zu.

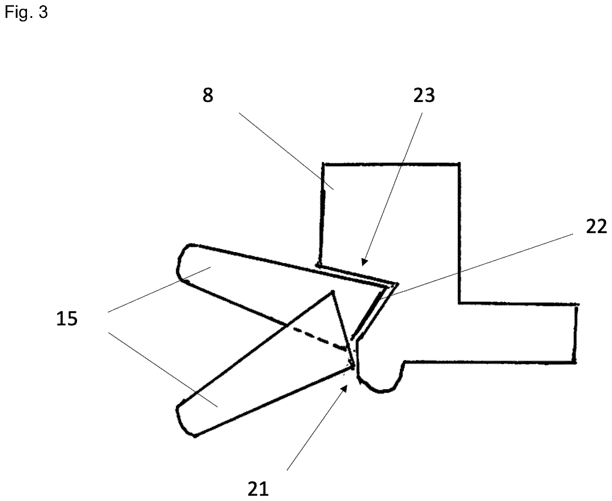

Fig. 3 zeigt eine schematische Skizze eines klappbaren Elements 15 in der Offen- sowie in der Geschlossenstellung. Die Haube 8 weist zur Aufnahme der Bewegung des Elements 15 einen Hohlraum 22 auf, in den sich das Element 15 bei der Bewegung in die Offenstellung hinein klappt. In der Offenstellung liegt das Element 15 an der Anschlagsfläche 23 der Haube 8 an. Die Anschlagsfläche 23 gewährleistet die Abstützung der Membran 6 in der Offenstellung, wodurch wirksam das Fließen der elastomeren Bestandteile der Membran 6 in nicht abgestützte Räume verhindert wird. In der Geschlossenstellung der Membran 6 liegt das Element 15 an der Auflagefläche 21 der Haube 8 auf und realisiert eine Abstützung auch in der Geschlossenstellung, wodurch die Membran 6 wirksam geschützt und gestützt wird.

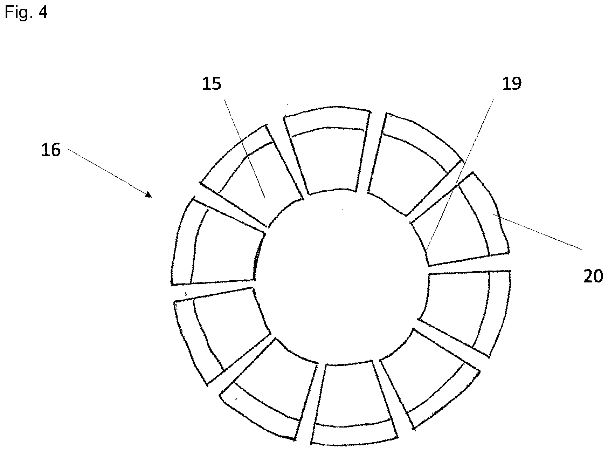

Fig. 4 zeigt eine Draufsicht der sternförmig ausgerichteten Abstützanordnung 16. In dieser Ausführungsvariante sind zehn klappbare Elemente 15 kreisrund zur Abstützanordnung 16 angeordnet. Dabei weisen die Abrundungen 19 zur Kreismitte und die Keilformen 20 nach außen in Richtung Haube 8.

## Patentansprüche

1. Membranventil (1), das eine Membran (6), eine Haube (8) und eine Kolbenstange (14) umfasst, wobei auf die Membran (6) eine Abstützanordnung (16) einwirkt, wobei die Abstützanordnung (16) aus klappbaren Elementen (15) ausgebildet ist, wobei die Kolbenstange (14) eine Ausformung (17) für eine Abrollbewegung der Elemente (15) und eine spezielle Aufnahme aufweist und die Elemente (15) beweglich an der Kolbenstange (14) gelagert sind, wodurch die Ausformung (17) der Kolbenstange (14) den Elementen (15) ein Abrollen für eine Klappbewegung zwischen einer Offen- und einer Geschlossenstellung ermöglichen,
wobei die Elemente (15) auf einer Seite eine Abrundung (19) und auf der anderen Seite eine Keilform (20) aufweisen,
wobei die Keilform zur Auflage an der Haube (5) zur Abgrenzung der Membranbewegung vorgesehen ist.

2. Membranventil nach Anspruch 1, wobei sich die Elemente (15) zwischen der Kolbenstange (14) und der Haube (8) erstrecken.

3. Membranventil nach Anspruch 1 oder 2, wobei die Elemente (15) sternförmig ausgerichtet sind.

4. Membranventil nach einem der Ansprüche 1 bis 3, wobei die Kolbenstange (14) eine Anschlagsfläche (18) zur Begrenzung der Elementbewegung aufweist.

5. Membranventil nach einem der Ansprüche 1 bis 4, wobei die Haube (8) eine Auflagefläche (21) für die Elemente (15) aufweist.

6. Membranventil nach einem der Ansprüche 1 bis 5, wobei die Haube (8) einen Hohlraum (22) zur Aufnahme der Elemente (15) aufweist.

7. Membranventil nach einem der Ansprüche 1 bis 6, wobei die Haube (8) eine Anschlagsfläche (23) zur Begrenzung der Elementbewegung aufweist.

8. Membranventil nach einem der Ansprüche 1 bis 7, wobei die Abstützanordnung (16) mehr als vier, vorzugsweise mehr als acht, insbesondere mehr als zwölf, Elemente (15) umfasst.

9. Membranventil nach einem der Ansprüche 1 bis 8, wobei der Querschnitt des Elements (15) von der Kolbenstange (14) zur Haube (8) zunimmt.

10. Membranventil nach einem der Ansprüche 1 bis 9, wobei die Abstützanordnung (16) ein Druckverteilungselement umfasst.

11. Membranventil nach einem der Ansprüche 1 bis 10, wobei die Elemente (15) generativ gefertigt sind.

## Claims

1. Diaphragm valve (1) which comprises a diaphragm (6), a hood (8) and a piston rod (14), wherein a support assembly (16) acts on the diaphragm (6), wherein the support assembly (16) is formed from foldable elements (15), wherein the piston rod (14) has a moulding (17) for a rolling movement of the elements (15) and a special receptacle, and the elements (15) are movably mounted on the piston rod (14), as a result of which the moulding (17) of the piston rod (14) enables the elements (15) to roll along for a folding movement between an open position and a closed position, wherein the elements (15) have a roundness (19) on one side, and a wedge shape (20) on the other side, wherein the wedge shape is provided for resting on the hood (5) in order to delimit the diaphragm movement.

2. Diaphragm valve according to Claim 1, wherein the elements (15) extend between the piston rod (14) and the hood (8).

3. Diaphragm valve according to Claim 1 or 2, wherein the elements (15) are oriented in a star-shaped manner.

4. Diaphragm valve according to one of Claims 1 to 3, wherein the piston rod (14) has a detent face (18) for delimiting the element movement.

5. Diaphragm valve according to one of Claims 1 to 4, wherein the hood (8) has a resting surface (21) for the elements (15).

6. Diaphragm valve according to one of Claims 1 to 5, wherein the hood (8) has a cavity (22) for receiving the elements (15).

7. Diaphragm valve according to one of Claims 1 to 6, wherein the hood (8) has a detent face (23) for delimiting the element movement.

8. Diaphragm valve according to one of Claims 1 to 7, wherein the support assembly (16) comprises more than four, preferably more than eight, in particular more than twelve, elements (15).

9. Diaphragm valve according to one of Claims 1 to 8, wherein the cross section of the element (15) increases from the piston rod (14) to the hood (8).

10. Diaphragm valve according to one of Claims 1 to 9, wherein the support assembly (16) comprises a pressure distribution element.

11. Diaphragm valve according to one of Claims 1 to 10, wherein the elements (15) are generatively manufactured.

## Revendications

1. Soupape à membrane (1) comprenant une membrane (6), un capot (8) et une tige de piston (14), un agencement de support (16) agissant sur la membrane (6), l'agencement de support (16) étant réalisé à partir d'éléments rabattables (15), la tige de piston (14) présentant une conformation (17) pour un mouvement de roulement des éléments (15) et un logement spécifique, les éléments (15) étant montés mobiles sur la tige de piston (14), moyennant quoi la conformation (17) de la tige de piston (14) permet aux éléments (15) de rouler pour un mouvement de rabattement entre une position ouverte et une position fermée,
les éléments (15) présentant un arrondi (19) d'un côté et une forme de coin (20) de l'autre côté,
la forme de coin étant prévue pour s'appuyer sur le capot (5) pour limiter le mouvement de la membrane.

2. Soupape à membrane selon la revendication 1, dans laquelle les éléments (15) s'étendent entre la tige de piston (14) et le capot (8).

3. Soupape à membrane selon la revendication 1 ou 2, dans laquelle les éléments (15) sont orientés en étoile.

4. Soupape à membrane selon l'une quelconque des revendications 1 à 3, dans laquelle la tige de piston (14) présente une surface de butée (18) pour limiter le mouvement des éléments.

5. Soupape à membrane selon l'une quelconque des revendications 1 à 4, dans laquelle le capot (8) présente une surface d'appui (21) pour les éléments (15).

6. Soupape à membrane selon l'une quelconque des revendications 1 à 5, dans laquelle le capot (8) présente une cavité (22) pour recevoir les éléments (15).

7. Soupape à membrane selon l'une quelconque des revendications 1 à 6, dans laquelle le capot (8) présente une surface de butée (23) pour limiter le mouvement des éléments.

8. Soupape à membrane selon l'une quelconque des revendications 1 à 7, dans laquelle l'agencement de support (16) comprend plus de quatre, de préférence plus de huit, notamment plus de douze, éléments (15).

9. Soupape à membrane selon l'une quelconque des revendications 1 à 8, dans laquelle la section transversale de l'élément (15) augmente de la tige de piston (14) au capot (8).

10. Soupape à membrane selon l'une quelconque des revendications 1 à 9, dans laquelle l'agencement de support (16) comprend un élément de répartition de pression.

11. Soupape à membrane selon l'une quelconque des revendications 1 à 10, dans laquelle les éléments (15) sont fabriqués de manière générative.
